# EUROPEAN PATENT APPLICATION

(11) **EP 3 273 090 A1**
(43) Date of publication of application: **24.01.2018**
(21) Application number: 16767952.1
(22) Date of filing: 03.03.2016
(51) Int. Cl.: F16F 15/04, E04H 9/02, F16F 1/40

(54) **SEISMIC BASE ISOLATION SUPPORT DEVICE**

(30) Priority: 20.03.2015 JP 2015058680
(71) Applicant: Oiles Corporation, Tokyo 108-0075 (JP)
(72) Inventor: WAKE, Tomotaka, Ashikaga-shi Tochigi 326-0327 (JP); NAGATA, Shuichi, Ashikaga-shi Tochigi 326-0327 (JP)
(74) Representative: J A Kemp
(86) International application number: PCT/JP2016/001162
(87) International publication number: WO 2016/152041

(57) **Abstract**

A seismic base isolation support apparatus 1 comprising: a laminated body 4 having elastic layers 2 and rigid layers 3 which are alternately laminated; a lead plug 7 which is disposed in a hollow portion 6 of the laminated body 4; and a thermal conductor 9 which is disposed between an outer peripheral surface 8 of the lead plug 7 and an inner peripheral surface 5.

## Description

### TECHNICAL FIELD

The present invention relates to an apparatus which is disposed between two structures to absorb relative horizontal vibrational energy between both structures and thereby reduce vibration acceleration applied to the structure, and more particularly to a seismic base isolation support apparatus which reduces seismic input acceleration by attenuating seismic energy to prevent the destruction of a structure such as a building, a bridge, or the like

### BACKGROUND ART

As is known from Patent Documents 1, 2 and 3, a seismic base isolation support apparatus, which includes a laminated body having alternately laminated elastic layers and rigid layers and a damping body constituted by a lead plug filled in a circularly columnar hollow portion defined by an inner peripheral surface of the laminated body, is installed between the ground and a structure such that after the load of the structure is supported, the transmission of the ground vibrations to the structure due to an earthquake or the like is prevented as practically as possible by the laminated body, and the vibrations transmitted to the structure are attenuated as speedily as possible by the lead plug.

Such a seismic base isolation support apparatus is adapted to absorb vibrational energy as the lead plug also undergoes plastic deformation when the laminated body undergoes shear deformation during an earthquake, and the lead plug extremely excels as a vibrational energy absorbing body since the lead plug satisfactorily absorbs vibrational energy, is easily recrystallized by heat generated in conjunction with the absorption of vibrational energy even after the plastic deformation, and does not cause mechanical fatigue.

### PRIOR ART DOCUMENTS

### PATENT DOCUMENTS

Patent Document 1: JP-B-1986-17984
Patent Document 2: JP-A-1997-105440
Patent Document 3: JP-A-2000-346132
Patent Document 4: JP-A-1988-268837

### SUMMARY OF THE INVENTION

### PROBLEMS THAT THE INVENTION IS TO SOLVE

However, it is pointed out that when the seismic base isolation support apparatus is subjected to long-period ground motion which is repeated for a long period with large amplitudes, a temperature rise occurs in the lead plug in conjunction with vibrational energy absorption due to plastic deformation, and the temperature rise can possibly rise to a vicinity of the melting point of lead. When the lead plug undergoes a temperature rise, not only does the vibrational energy absorbing capability of the lead plug with respect to deformation decline, but a deterioration can possibly occur in the material property value, particularly the modulus of elasticity, of the elastic layers of the laminated body in contact with the lead plug.

In order to prevent the temperature rise of lead, in, for example, Patent Document 4 there has been proposed a technique in which, by dispersedly disposing in the lead member a metal having a lower melting point than lead, a so-called a low-melting-point metal, as a heat absorbent material, heat generated from the lead member is absorbed as the molten heat of the low-melting-point metal during an earthquake, so as to prevent an excessive temperature rise of the lead member, or a technique in which, by dispersedly disposing a liquid (water) in the lead member, heat generated from the lead member is absorbed as heat of vaporization of the liquid during an earthquake, so as to prevent an excessive temperature rise of the lead member.

Nevertheless, in the technique proposed in Patent Document 4, particularly the technique in which a liquid (water) is dispersedly disposed in the lead member, it is necessary to take into consideration the evaporation and leakage of the liquid, and it is difficult to say that this technique is practically feasible with respect to earthquakes for which it is impossible to predict when they will occur.

The above-described problem is not limited to the lead plug using lead and a tin plug using tin and, in short, can occur with a damping body whose vibrational energy absorbing capability declines due to the temperature rise.

The present invention has been devised in view of the above-described aspects, and its object is to provide a seismic base isolation support apparatus which, when subjected to long-period ground motion, is capable of lowering as practically as possible the temperature rise of the damping body which causes the vibrational energy absorbing capability to decline, and of effectively exhibiting the base isolation function even in long-period ground motion.

### MEANS FOR SOLVING THE PROBLEMS

A seismic base isolation support apparatus in accordance with the present invention comprises: a laminated body having a plurality of rigid layers and elastic layers; a damping body disposed in a columnar hollow portion defined by an inner peripheral surface of the laminated body; and a thermal conductor disposed between an outer peripheral surface of the damping body and the inner peripheral surface of the laminated body and having a thermal conductivity higher than that of the elastic layers, wherein the thermal conductor has an inner peripheral surface which is in contact with the outer peripheral surface, which is tubular, of the damping body and an outer peripheral surface which is in contact with the inner peripheral surface of the laminated body, and each of the rigid layers has an annular steel plate having a higher thermal conductivity than the thermal conductivity of the elastic layer.

According to the seismic base isolation support apparatus in accordance with the present invention, since the thermal conductor has an inner peripheral surface which is in contact with the tubular outer peripheral surface of the damping body and an outer peripheral surface which is in contact with the inner peripheral surface of the laminated body, and each of the rigid layers has an annular steel plate having a higher thermal conductivity than the thermal conductivity of the elastic layer, the heat generated in the damping body in conjunction with the absorption of vibrational energy based on the shear deformation of the damping body due to the long-period ground motion is effectively transmitted to the rigid layers through the thermal conductor disposed between the outer peripheral surface of the damping body and the inner peripheral surface of the laminated body, and is radiated through the rigid layers. As a result, it is possible to avoid the temperature rise of the damping body due to the accumulation of heat and effectively absorb the seismic energy without causing the vibrational energy absorbing capability of the damping body ascribable to the temperature rise to decline.

In the seismic base isolation support apparatus in accordance with the present invention, in a preferred example, the thermal conductor, the inner peripheral surface of the thermal conductor, and the outer peripheral surface of the thermal conductor are tubular in shape, and the thermal conductor includes at least a polymer and a filler having a thermal conductivity higher than that of the elastic layer, in which case the polymer may include at least one of a thermosetting polymer and a thermoplastic polymer.

The thermosetting polymer in a preferred example includes at least one of a crosslinked rubber, an epoxy resin, a polyimide resin, a bismaleimide resin, a phenolic resin, an unsaturated polyester resin, a thermosetting polyphenylene ether resin, and a thermosetting modified polyphenylene ether resin.

As the crosslinked rubber, it is possible to cite as preferred examples natural rubber (NA), butadiene rubber (BR), isoprene rubber (IR), nitrile rubber (NBR), hydrogenated nitrile rubber (HNBR), chloroprene rubber (CR), ethylene propylene rubber (EPR, EPDM), chlorinated polyethylene (CM), chlorosulfonated polyethylene (CSM), butyl rubber (IIR), halogenated butyl rubber, fluorine rubber, urethane rubber, acryl rubber (ACM), styrene-butadiene rubber (SBR), silicone rubber (VMQ, FVMQ), and the like.

The thermoplastic polymer may include at least one of a thermoplastic synthetic resin and a thermoplastic elastomer.

The thermoplastic synthetic resin is not particularly limited and may be appropriately selected depending on the intended purpose, and it is possible to cite, for example, polyethylene (PE), polypropylene (PP), an ethylene-α-olefin copolymer such as ethylene-propylene copolymer, polymethyl pentene (PMP), polyvinyl chloride (PVC), polyvinylidene chloride (PVDC), polyvinyl acetate (PVAc), ethylene-vinyl acetate copolymer (EVA), polyvinyl alcohol (PVA), polyacetal (POM), polyvinylidene fluoride (PVDF), polyethylene terephthalate (PET), polybutylene terephthalate (PBT), polyethylene naphthalate (PEN), polystyrene (PS), polyacrylonitrile (PAN), polyamide (PA), polycarbonate (PC), polyphenylene sulfide (PPS), polysulfone (PSU), polyether sulfone (PES), and the like.

As the thermoplastic elastomer, it is possible to cite, for example, styrene-based thermoplastic elastomers such as a styrene-butadiene copolymer or its hydrogenated polymer and a styrene-isoprene block copolymer or its hydrogenated polymer, olefin-based thermoplastic elastomers, vinyl chloride-based thermoplastic elastomers, polyester-based thermoplastic elastomers, polyurethane-based thermoplastic elastomers, polyamide-based thermoplastic elastomers, and the like.

In the present invention, in a preferred example, the filler includes at least one of a carbon-based filler, a metallic filler, and a ceramic filler.

As the carbon-based filler, it is possible to cite furnace black such as Ketjen black, carbon blacks such as acetylene black, channel black, and gas black, carbon fibers such as polyacrylonitrile-based carbon fiber and pitch-based carbon fiber, graphites such as artificial graphite, spherical graphite, flake graphite, vein graphite, and amorphous graphite, diamond, fullerene, carbon micro-coil, a carbon nanotube (vapor-grown carbon fiber), graphene, and the like.

The size of particles of the carbon black or the graphite may be determined by taking into consideration of the dispersibility and the thickness of the thermal conductor. The average particle size of the carbon black is preferably 10 nm to 700 nm, and the average particle size of the graphite is preferably 5 to 150 µm. Further, from the viewpoint of improving fluidity and moldability, the average particle size of the graphite is preferably 30 to 150 µm. As the carbon fiber, it is possible to use chopped fibers with a fiber diameter of 5 to 20 µm and a fiber length of 2 to 8mm, milled fibers with a fiber diameter of 5 to 20 µm and a fiber length of 20 to 400 µm, and the like. In the case of carbon nanotubes, the simple substance of a single-walled nanotube is preferably 1 to 2.5 nm in diameter and 5 to 10 nm in lengthwise direction, and a multi-walled nanotube is preferably 10 to 40 nm in diameter and 10 nm in lengthwise direction.

Specific examples of the Ketjen black include "EC300J and EC600JD (tradenames)" manufactured by Lion Corporation and the like. Specific examples of the acetylene black include "DENKA BLACK (tradename)" manufactured by Denki Kagaku Kogyo Kabushiki Kaisha, and the like. Specific examples of the flake graphite include "BF-3AK and CPB-6S (tradenames)" manufactured by Chuetsu Graphite Works Co., Ltd., "UF-2 (tradename)" manufactured by Fuji Graphite Industry Co., Ltd., "PS-99 (average particle size: 7 µm)" manufactured by Nishimura Graphite Co., Ltd., "KS15 (tradename) (average particle size: 8 µm)" manufactured by TIMCAL Ltd., "CB150 (tradename) (average particle size: 40 µm or 130 µm)" manufactured by Nippon Graphite Industries, Co., Ltd., and the like. Specific examples of the amorphous graphite include "APR (tradename)" manufactured by Chuetsu Graphite Works Co., Ltd., "FAG-1 (tradename)" manufactured by Fuji Graphite Industry Co., Ltd., and the like. Specific examples of the artificial graphite include "G-6S (tradename)" manufactured by Chuetsu Graphite Works Co., Ltd. and "FGK-1 (tradename)" manufactured by Fuji Graphite Industry Co., Ltd. Specific examples of the spherical graphite include "WF-15C (tradename)" manufactured by Chuetsu Graphite Works Co., Ltd., "WF-010 and WF-015 (tradenames)" manufactured by Fuji Graphite Industry Co., Ltd., and the like.

Specific examples of the carbon fiber include, among polyacrylonitrile-based carbon fibers, "TORAYCA CHOP (tradename)" manufactured by Toray Industries, Inc., "PYROFIL (tradename)" manufactured by Mitsubishi Rayon Co., Ltd., "BESFIGHT (tradename)" manufactured by Toho Tenax Co., Ltd., and the like. Among the pitch-based carbon fibers, specific examples of the carbon fiber include "DIALEAD (tradename)" manufactured by Mitsubishi chemical Functional Products, Inc., "DONACARBO (tradename)" manufactured by Osaka Gas Chemicals Co., Ltd., "KRECA Chop (tradename)" manufactured by KUREHA CORPORATION, "GRANOC Milled Fiber (tradename)" manufactured by Nippon Graphite Fiber Corporation, and the like.

As the metallic filler, it is preferable to use one or more kinds of metal powder selected from the group consisting of aluminum, copper, silver, iron, nickel, silicon, zinc, magnesium, tungsten, and tin or an alloy powder of these metals (e.g., aluminum bronze, 7-3 brass, and naval brass). As these metallic fillers, particulate matter with an average particle size of 0.1 to 200 µm, preferably an average particle size of 0.1 to 50 µm, is suitable. In particular, if the average particle size is less than 0.1 µm, the effect of improving the thermal conductivity becomes inferior, and molding is rendered difficult, so that it is not preferable.

As the ceramic filler, it is possible to cite metal oxides such as aluminum oxide (Al₂O₃), magnesium oxide (MgO), beryllium oxide (BeO), and titanium oxide (TiO₂), metal nitrides such as boron nitride (hexagonal BN or cubic BN), aluminum nitride (AlN), and silicon nitride (Si₃N₄), and metal carbides such as boron carbide (B₄C), aluminum carbide (Al₄C₃), and silicon carbide (SiC), and the like.

If the ceramic filler is constituted of a powder having an average particle size of 3 to 50 µm, preferably 5 to 40 µm, it is desirable from the viewpoint of improved performance of thermal conductivity, heat resistance, and humidity resistance.

The amount of compounding of the filler consisting of at least one of these carbon-based fillers, metallic fillers, and ceramic fillers with the polymer can be selected from a wide range depending on the intended thermal conductivity and strength. In a preferred example, the filler is 20 to 500 parts by mass with respect to 100 parts by mass of the polymer. If the compounding amount of the filler is excessively small, the thermal conductivity of the thermal conductor becomes low, whereas if it is excessively large, processability in the formation of the thermal conductor declines, so that it is not favorable.

If the thermal conductor has a thickness of 0.3 mm or greater, the thermal conductor is able to effectively transmit to the rigid layers the heat generated in the damping body, and is able to avoid the accumulation of heat in the damping body. On the other hand, if the thermal conductor has a thickness in excess of 1.0 mm, there is a possibility of causing the shear deformability of the damping body to decline, so that the thermal conductor should preferably have a thickness of 0.3 to 1.0 mm.

The thermal conductor should preferably have a thermal conductivity of at least 1 W/m·K, preferably 10 W/m·K or more, or more preferably 30 W/m·K or more so as to allow the heat generated in the damping body to be radiated speedily to the rigid layers.

In order for the thermal conductor to have a thermal conductivity of 1 W/m·K or more, the filler may be contained at a ratio of 20 to 500 parts by mass with respect to 100 parts by mass of the polymer.

In the seismic base isolation support apparatus in accordance with the present invention, each steel plate in a preferred example is constituted of a cold rolled steel plate (SPCC) or the like, and each elastic layer in a preferred example is constituted of a rubber plate formed of a rubber material such as ethylene propylene rubber, nitrile rubber, butyl rubber, halogenated butyl rubber, chloroprene rubber, natural rubber, isoprene rubber, styrene butadiene rubber, butadiene rubber, or the like.

In the present invention, each of the plurality of rigid layers may have, in addition to the steel plate, a coating layer covering the steel plate, preferably the entire surface thereof, and having a thermal conductivity higher than that of the steel plate and a thickness of approximately 0.1 to 100µm, in which case, in a preferred example, the thermal conductor at the outer peripheral surface thereof is in contact with the surface of the coating layer serving as the inner peripheral surface of the laminated body. Such a coating layer can be formed by subjecting the steel plate to plating such as electroplating or hot-dip plating, e.g., zinc plating, aluminum plating, copper plating, tin plating, nickel plating, chrome plating, brass plating, and the like, or by subjecting the steel plate to metal spraying of zinc, aluminum, zinc aluminum, or aluminum magnesium. If each of the plurality of rigid layers has such a steel plate and the coating layer, the transmission of the heat of the damping body to the steel plates can be effected speedily through the coating layer, so that the accumulation of heat in the damping body can be avoided as practically as possible, thereby making it possible to effectively prevent a decline in the vibrational energy absorbing capability ascribable to the temperature rise of the damping body.

In a case where each of the plurality of rigid layers does not have such a coating layer, the thermal conductor at the outer peripheral surface thereof may be in contact with surfaces of the steel plates constituting the inner peripheral surface of the laminated body.

In the seismic base isolation support apparatus in accordance with the present invention, the columnar hollow portion defined by the inner peripheral surface of the laminated body may be provided in a singular number, but may be provided in a plural number. In a case where each of the plurality of hollow portions is defined by each of a plurality of inner peripheral surfaces of the laminated body, and the damping body is disposed in each of the plurality of hollow portions, if thermal conductors are disposed between the outer peripheral surfaces of all the damping bodies and the inner peripheral surfaces of the laminated body, the heat radiation of the columnar bodies can be effected effectively. However, the thermal conductor may be disposed between the outer peripheral surface of at least one damping body and the inner peripheral surface of the laminated body. In a preferred example, the damping body has a circularly columnar form having a cylindrical outer peripheral surface, in which case the hollow portion is also circularly columnar in shape by being defined by the cylindrical inner peripheral surface. Furthermore, the laminated body may have a rubber coating layer which is in contact with the inner peripheral surfaces of the rigid layers and the elastic layers and is constituted of a rubber material equivalent to that of the elastic layer. In the case where the laminated body has such a rubber coating layer, the inner peripheral surface of that rubber coating layer serves as the inner peripheral surface of the laminated body, but in the case where the laminated body does not have the rubber coating layer, the inner peripheral surfaces of the rigid layers and the elastic layers serve as the inner peripheral surface of the laminated body. In addition, the damping body in a preferred example is a lead plug or a tin plug, but the damping body is not limited to the same, and may be another plug whose vibrational energy absorbability declines with a temperature rise, e.g., a plug described in JP-A-2015-7468 and containing a thermally conductive filler, graphite, a thermosetting resin, and the like.

Preferably, the layer thickness of the rubber coating layer which is constituted of a rubber material equivalent to that of the elastic layer and binds the respective inner peripheral surfaces of the rigid layers and the elastic layers to the outer peripheral surface of the thermal conductor is preferably 0.3 to 0.5 mm. If this layer thickness is less than 0.3 mm, the role of the rubber coating layer as a binding layer is not sufficiently exhibited, whereas if this layer thickness exceeds 0.5 mm, there is a possibility of the effective heat transmission from the damping body to the rigid layers being hampered by the rubber coating layer.

In a preferred example of the present invention, the rigid layers, the elastic layers, the thermal conductor, and the rubber coating layer are firmly adhered to each other at their mutual contact surfaces by, for example, vulcanization bonding or an adhesive agent.

In the seismic base isolation support apparatus in accordance with the present invention, an outer peripheral protective layer formed of a natural rubber, preferably a rubber material excelling in weather resistance, and covering the outer peripheral surface of the laminated body may be further provided on the outer peripheral surface of the laminated body for the purpose of improving weather resistance and the like.

As the rubber material for the outer peripheral protective layer, a natural rubber may be used, but a rubber-like polymer excelling in weather resistance is preferable, and, for example, butyl rubber, polyurethane, ethylene propylene rubber, Hypalon, chlorinated polyethylene, ethylene vinyl acetate rubber, and chloroprene rubber are preferable from the viewpoint of weather resistance. If adhesion to the rubber for forming the elastic layer is taken into consideration, butyl rubber, ethylene propylene rubber, and chloroprene rubber are preferable. Such an outer peripheral protective layer may have a layer thickness of 5 to 10 mm or thereabouts.

### ADVANTAGES OF THE INVENTION

According to the present invention, it is possible to provide a seismic base isolation support apparatus which, when subjected to long-period ground motion, is capable of lowering the temperature rise of the damping body as practically as possible, and of effectively exhibiting the base isolation function.

### BRIEF DESCRIPTION OF THE DRAWINGS

Fig. 1 is an explanatory vertical cross-sectional view of a preferred embodiment of a seismic base isolation support apparatus in accordance with the present invention;
Fig. 2 is an explanatory cross-sectional view taken in the direction of arrows along lines II - II in Fig. 1;
Fig. 3 is an explanatory enlarged cross-sectional view of an essential portion in Fig. 1;
Fig. 4 is an explanatory enlarged cross-sectional view of another essential portion in Fig. 1; and
Fig. 5 is an explanatory perspective view of a thermal conductor shown in Fig. 1.

### MODE FOR CARRYING OUT THE INVENTION

Next, a more detailed description will be given of the present invention on the basis of the preferred embodiment shown in the drawings and examples. It should be noted that the present invention is not limited to the embodiment and the examples.

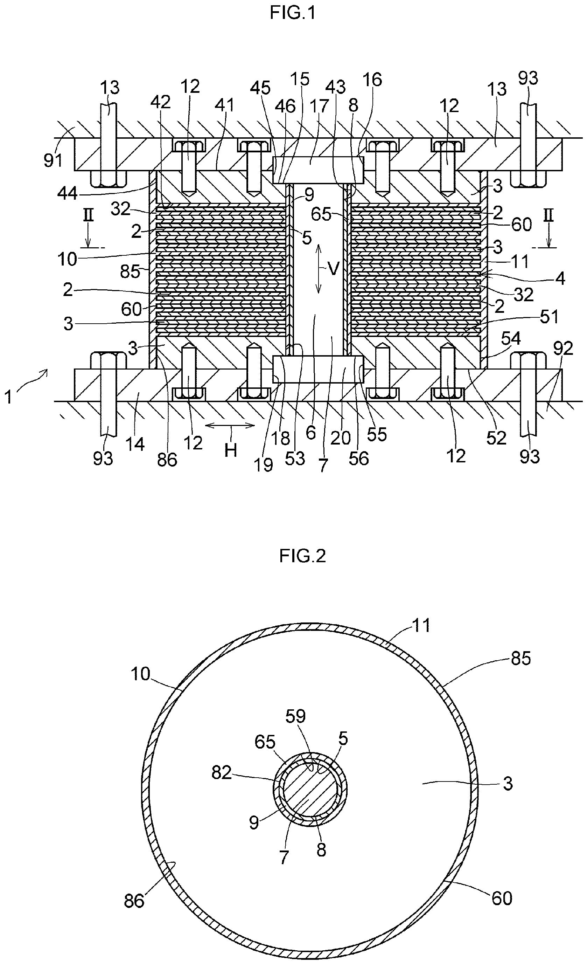

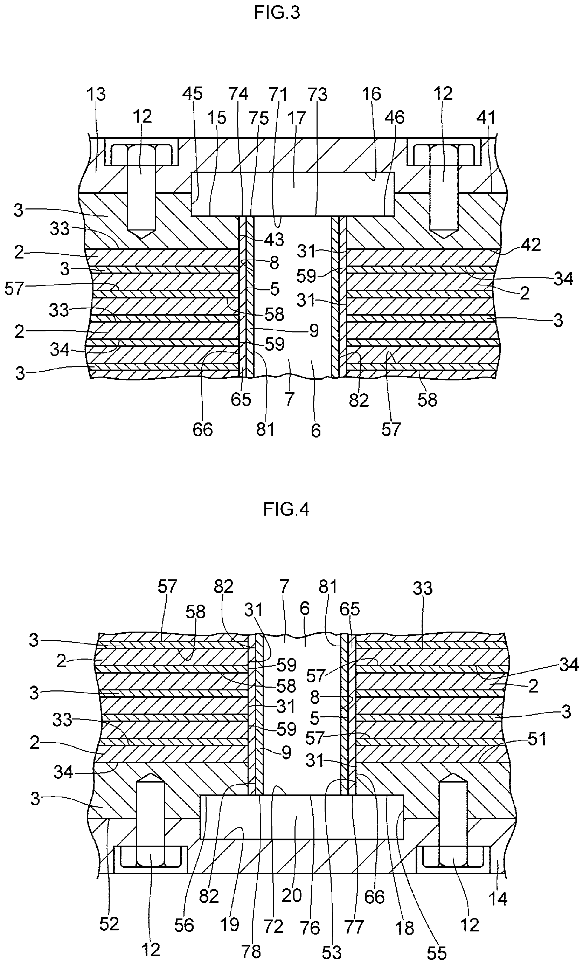

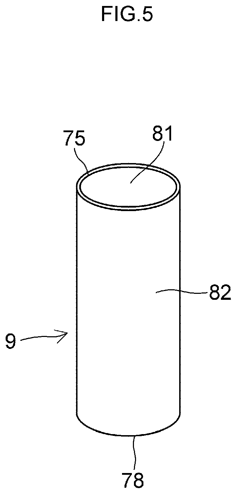

In Figs. 1 to 5, a seismic base isolation support apparatus 1 in accordance with this embodiment is comprised of a cylindrical laminated body 4 having a plurality of annular elastic layers 2 and a plurality of annular rigid layers 3 which are alternately laminated in a lamination direction V; a circularly columnar lead plug 7 which serves as a damping body and is disposed in a circularly columnar hollow portion 6 defined by a cylindrical inner peripheral surface 5 of the laminated body 4; a cylindrical thermal conductor 9 disposed in the hollow portion 6 between a cylindrical outer peripheral surface 8 of the lead plug 7 and the inner peripheral surface 5 and having a thermal conductivity higher than that of the elastic layer 2, e.g., a thermal conductivity of at least 1 W/m·K; an outer peripheral protective layer 11 formed of a rubber material excellent in weather resistance and covering a cylindrical outer peripheral surface 10 of the laminated body 4; an upper mounting plate 13 and a lower mounting plate 14 which are respectively connected to an uppermost rigid layer 3 of the rigid layers 3 and a lowermost rigid layer 3 of the rigid layers 3 by means of bolts 12; a disk-shaped shear key 17 which is fittingly secured in a circular recess 15 of the uppermost rigid layer 3 and a circular recess 16 of the upper mounting plate 13; and a disk-shaped shear key 20 which is fittingly secured in a circular recess 18 of the lowermost rigid layer 3 and a circular recess 19 of the lower mounting plate 14.

Each of the elastic layers 2 is constituted of an annular rubber plate having elasticity and includes a cylindrical inner peripheral surface 31, a cylindrical outer peripheral surface 32, an annular upper surface 33, and an annular lower surface 34.

The uppermost and lowermost rigid layers 3 are formed by rigid annular thick-walled steel plates which are thicker than the elastic layers 2 and the rigid layers 3 between the uppermost and lowermost rigid layers 3. The uppermost rigid layer 3 has an annular upper surface 41, an annular lower surface 42, a cylindrical inner peripheral surface 43, a cylindrical outer peripheral surface 44, an inner peripheral surface 45 defining the recess 15 and larger in diameter than the inner peripheral surface 43, and an annular upper surface 46 defining the recess 15 in cooperation with the inner peripheral surface 45. The lowermost rigid layer 3 has an annular upper surface 51, an annular lower surface 52, a cylindrical inner peripheral surface 53, a cylindrical outer peripheral surface 54, an inner peripheral surface 55 defining the recess 18 and larger in diameter than the inner peripheral surface 53, and an annular lower surface 56 defining the recess 18 in cooperation with the inner peripheral surface 55. The rigid layers 3 between the uppermost and lowermost rigid layers 3 are formed by rigid annular thin-walled steel plates thinner than the uppermost and lowermost rigid layers 3, and each have a cylindrical inner peripheral surface 59 and a cylindrical outer peripheral surface 60 in addition to the annular upper surface 57 and lower surface 58. Each of the steel plates of the uppermost and lowermost rigid layers 3 and the rigid layers 3 between the uppermost and lowermost rigid layers 3 has a higher thermal conductivity (W/m-K) than the thermal conductivity of the elastic layers 2.

The uppermost rigid layer 3 at the lower surface 42 thereof is in close contact with the upper surface 33 of the elastic layer 2 adjacent thereto in the lamination direction V, while the lowermost rigid layer 3 at the upper surface 51 thereof is in close contact with the lower surface 34 of the elastic layer 2 adjacent thereto in the lamination direction V. Each of the rigid layers 3 between the uppermost and lowermost rigid layers 3 at the upper surface 57 thereof is in close contact with the lower surface 34 of the elastic layer 2 adjacent thereto in the lamination direction V and at the lower surface 58 thereof is in close contact with the upper surface 33 of the elastic layer 2 adjacent thereto in the lamination direction V, respectively.

The laminated body 4 further includes, in addition to the elastic layers 2 and the rigid layers 3, a rubber coating layer 65 constituted of a rubber material equivalent to that of the elastic layers 2, and the rubber coating layer 65 has a cylindrical outer peripheral surface 66 which is in close contact with the inner peripheral surface 43, the plurality of inner peripheral surfaces 31 and 59, and the inner peripheral surface 53, as well as the inner peripheral surface 5 defining the hollow portion 6.

The hollow portion 6 is defined by a circular lower surface 71 of the shear key 17 and a circular upper surface 72 of the shear key 20 in addition to the inner peripheral surface 5. The lower surface 71 is in close contact with a circular upper end face 73 of the lead plug 7, an annular upper end face 74 of the rubber coating layer 65, and an annular upper end face 75 of the thermal conductor 9, whereas the upper surface 72 is in close contact with a circular lower end face 76 of the lead plug 7, an annular lower end face 77 of the rubber coating layer 65, and an annular lower end face 78 of the thermal conductor 9.

The thermal conductor 9 which has a wall thickness of 0.3 to 1.0 mm and a thermal conductivity of at least 1 W/m·K includes, in addition to the upper end face 75 and the lower end face 78, an inner peripheral surface 81 which is in close contact with the outer peripheral surface 8 and an outer peripheral surface 82 which is in close contact with the inner peripheral surface 5.

Each elastic layer 2 and each rigid layer 3 are firmly bonded to each other by, for instance, vulcanization bonding or an adhesive agent at the upper surfaces 33, 51, and 57 and the lower surfaces 34, 42, and 58 thereof, i.e., at the respective mutually contacting contact surfaces. The rubber coating layer 65 and each of the elastic layers 2 and the rigid layers 3 are firmly bonded to each other by vulcanization bonding or an adhesive agent at the outer peripheral surface 66 and inner peripheral surfaces 31, 43, 53, and 59 thereof, i.e., at their respective mutually contacting contact surfaces. The rubber coating layer 65 and the thermal conductor 9 are firmly bonded to each other by vulcanization bonding or an adhesive agent at the inner peripheral surface 5 and outer peripheral surface 82 thereof, i.e., at their respective mutually contacting contact surfaces.

The outer peripheral surface 10 is constituted by the pluralities of outer peripheral surfaces 32 and 60 as well as the outer peripheral surfaces 44 and 54. The outer peripheral protective layer 11 having a cylindrical inner peripheral surface 86 in addition to a cylindrical outer peripheral surface 85 and each of the elastic layers 2 and the rigid layers 3 are firmly bonded to each other by vulcanization bonding or an adhesive agent at the inner peripheral surface 86 and outer peripheral surfaces 32, 44, 54, and 60 thereof, i.e., at their respective mutually contact surfaces.

At least one of the rubber coating layer 65 and the outer peripheral protective layer 11 may be formed integrally with the elastic layers 2 by the extrusion of the elastic layers 2 at the time of pressurized vulcanization of the laminated body 4.

The seismic base isolation support apparatus 1 is connected at the upper mounting plate 13 to a structure 91 and at the lower mounting plate 14 to a foundation 92, respectively, by means of bolts 93, and is used so as to support the load of the structure 91 in the lamination direction (vertical direction) V by means of the laminated body 4 and the lead plug 7.

The thermal conductor 9 may be manufactured by the following method (1), (2), or (3).

### (1) In the Case of Using Natural Rubber as Polymer

A thermal conductor composition is fabricated by compounding a crosslinking rubber with at least one of fillers and, as required, a vulcanization accelerator (e.g., thiazole series such as N-cyclohexyl-2-benzothiazyl sulfenamide, 2-mercaptobenzothiazole and dibenzothiazyl disulfide and guanidine series such as diphenylguanidine), a vulcanization accelerator aid [a metal oxide such as zinc oxide (ZnO) and magnesium oxide, and an aliphatic acid such as stearic acid, lauric acid, and palmitic acid], a vulcanizing agent (e.g., sulfur and a sulfur-containing compound), a process oil (e.g., paraffinic, naphthenic, and aromatic series), and an anti-aging agent [such as N-isopropyl-N'-phenyl-P-phenylenediamine or N-(1,3-dimethylbutyl)-N' -phenyl-P-phenylenediamine], and then by subjecting the compounded material to mastication and kneading processes. This thermal conductor composition is subsequently subjected to rolling into an elongated sheet with a uniform thickness and a predetermined width by using a calendar roller. This sheet is cut into a length which goes around the outer peripheral surface 8 of the lead plug and is used as an unvulcanized sheet for the thermal conductor 9.

### (2) In the Case of Using Novolac-Type Phenolic Resin as Polymer

At least one of fillers and, as required, a curing agent, a release agent, and a hardening accelerator are added to and mixed with a novolac-type phenolic resin powder, and a mixture produced by agitating and mixing them uniformly together with an appropriate amount of a solvent by a mixer such as a Henschel mixer is charged into a kneader. After the kneaded mixture which has been kneaded while being heated is allowed to cool and solidify, a molding material obtained by pulverizing the cooled and solidified kneaded mixture into an appropriate size is charged into a mold and is subjected to compression molding under pressure and heat to form an elongated sheet having a uniform thickness and a predetermined width. This sheet is cut into a length which goes around the outer peripheral surface of the lead plug 7 and is used as a sheet for the thermal conductor 9.

### (3) In the Case of Using Thermoplastic Synthetic Resin or Thermoplastic Elastomer as Polymer

A mixture fabricated by mixing a thermoplastic synthetic resin or a thermoplastic elastomer and at least one of the fillers by a mixer such as a Henschel mixer is extruded into strand form by a screw-type extruder. Pellets of a thermal conductor composition are fabricated by cutting the extruded strand-form mixture, and these pellets are fed into an extrusion molding machine having a T-die and are subjected to extrusion molding to thereby process the pellets into an elongated sheet having a uniform thickness and a predetermined width. This sheet is cut into a length which goes around the outer peripheral surface of the lead plug 7 and is used as a sheet for the thermal conductor 9.

The seismic base isolation support apparatus 1 including such a thermal conductor 9 may be manufactured as described below.

### Fabrication of Rubber Plates for Elastic Layers 2

A rubber composition is fabricated by compounding a crosslinking rubber with a vulcanization accelerator, a vulcanization accelerator aid, a vulcanizing agent, a process oil, and an anti-aging agent, and then by subjecting the compounded material to mastication and kneading processes. Subsequently, unvulcanized rubber plates for the elastic layers 2 are cut out from an elongated unvulcanized rubber sheet with a uniform thickness and a predetermined width obtained by rolling the rubber composition by using a calendar roller.

### Fabrication of Steel Plates for Rigid Layers 3

Annular thin-walled steel plates for the rigid layers 3 between the uppermost and lowermost rigid layers 3 are fabricated from a thin-walled cold rolled steel plate (SPCC) by press working. Similarly, annular thick-walled steel plates for the uppermost and lowermost rigid layers 3 are fabricated from a thick-walled cold rolled steel plate (SPCC) by press working.

### Fabrication of Laminated Body 4 and Seismic Base Isolation Support Apparatus 1

The sheet for the thermal conductor 9 obtained by the above-described method (1), (2), or (3) is wound into a cylindrical shape around the outer peripheral surface of a circularly columnar body provided in a mold and is affixed thereto. Furthermore, as required, the unvulcanized rubber sheet for the rubber coating layer 65 with a thickness of 0.3 to 0.5 mm is wound into a cylindrical shape around the outer peripheral surface of the cylindrical sheet for the thermal conductor 9 and is affixed thereto. Still further, the thick-walled steel plate for the lowermost rigid layer 3 with the recess 18 facing down is fittingly inserted, through a through hole defined by the inner peripheral surface 53, over the outer peripheral surface of that cylindrical rubber sheet for the rubber coating layer 65, and an adhesive agent is applied to the upper surface 51 of that thick-walled steel plate. As the adhesive agent, a two-liquid adhesive coating type is preferable in which after an undercoat adhesive is applied to the upper surface 51 as a primer, a topcoat adhesive is further applied thereto. Subsequently, the unvulcanized rubber plate for the elastic layer 2 is fittingly inserted, through a through hole defined by the inner peripheral surface 31, over the outer peripheral surface of the cylindrical sheet for the thermal conductor 9 or over the outer peripheral surface of the cylindrical rubber sheet for the rubber coating layer 65, if provided as required, and is placed on the upper surface 51 of the thick-walled steel plate for the lowermost rigid layer 3 with the adhesive agent applied thereto. Thereafter, the plurality of thin-walled steel plates for the rigid layers 3 between the uppermost and lowermost rigid layers 3 with the adhesive agent applied to the upper surfaces 57 and the lower surfaces 58 thereof and the plurality of unvulcanized rubber plates for the elastic layers 2 are alternately stacked around the cylindrical sheet for the thermal conductor 9 affixed to the outer peripheral surface of the circularly columnar body provided in the mold, or around the cylindrical rubber sheet for the rubber coating layer 65, if provided as required. Finally, the thick-walled steel plate for the uppermost rigid layer 3 with the adhesive agent applied to the lower surface 42 is fittingly inserted over the cylindrical sheet for the thermal conductor 9 provided in the mold, or over the cylindrical rubber sheet for the rubber coating layer 65, if provided as required, such that the thick-walled steel plate for the uppermost rigid layer 3 is further placed over the stacked assembly including the lowermost rigid layer 3, the thin-walled steel plates for the rigid layers 3 between the upmost and lowermost rigid layers 3, and the unvulcanized rubber plates for the elastic layers 2 which are alternately stacked around the cylindrical sheet for the thermal conductor 9 affixed to the outer peripheral surface of the circularly columnar body provided in the mold, or around the cylindrical rubber sheet for the rubber coating layer 65, if provided as required, thereby fabricating the unvulcanized laminated body 4 including the cylindrical sheet for the thermal conductor 9 and the cylindrical rubber sheet for the rubber coating layer 65 provided as required. A thin-walled unvulcanized rubber sheet excellent in weather resistance for the outer peripheral protective layer 11 is wound around the outer peripheral surface 10 of this unvulcanized laminated body 4. This unvulcanized laminated body 4 is subjected to heat pressing to effect vulcanization and mutually vulcanized bonding of the cylindrical rubber sheet for the thermal conductor 9, the unvulcanized rubber plates for the elastic layers 2, the unvulcanized cylindrical rubber sheet for the outer peripheral protective layer 11, and the cylindrical rubber sheet for the rubber coating layer 65 provided as required, to thereby fabricate the laminated body 4 including the thermal conductor 9, the outer peripheral protective layer 11, and the rubber coating layer 65.

This laminated body 4 is removed from the circularly columnar body provided in the mold, and the lead plug 7 is press-fitted in the circularly columnar hollow portion defined by the inner peripheral surface 81. Subsequently, the shear keys 17 and 20 are respectively fitted in the recesses 15 and 18, and the upper mounting plate 13 and the lower mounting plate 14 are respectively connected to the uppermost rigid layer 3 and the lowermost rigid layer 3 by means of the bolts 12 to thereby fabricate the seismic base isolation support apparatus 1.

In the fabrication of such a seismic base isolation support apparatus 1, the rubber coating layer 65 and the outer peripheral protective layer 11 may be formed to the extrusion of inner peripheral sides and outer peripheral sides of the unvulcanized rubber plates for the elastic layers 2 in the heat pressing of the laminated body 4 by omitting the winding around of the rubber sheets for the rubber coating layer 65 and the outer peripheral protective layer 11.

### EXAMPLES

### Fabrication of Unvulcanized Rubber Sheet for Elastic Layers 2

A natural rubber as a crosslinking rubber, a carbon black, zinc oxide (ZnO), stearic acid, an anti-aging agent, and a process oil were charged into a general-purpose kneader and were kneaded. Then, a vulcanization accelerator and a vulcanizing agent were charged thereinto and were kneaded by using an open roll, and the kneaded rubber composition was rolled to thereby fabricate an unvulcanized rubber sheet with a thickness of 5 mm.

### Fabrication of Thin-Walled Steel Plates and Thick-Walled Steel Plates for Rigid Layers 3

As the rigid layers 3 between the uppermost and lowermost rigid layers 3, disk-shaped thin-walled steel plates constituted of cold rolled steel plates (SPCC) each having an outside diameter of 1000 mm and a thickness of 3.9 mm and having in a central portion a through hole defined by the inner peripheral surface 59 with a diameter of 202 mm were prepared. As the uppermost and lowermost rigid layers 3, two thick-walled steel plates constituted of cold rolled steel plates (SPCC) having an outside diameter of 1000 mm and a thickness of 40 mm and respectively having in central portions thereof recesses 15 and 18 with a diameter of 240 mm and having in respective central portions of the recesses 15 and 18 through holes respectively defined by the inner peripheral surfaces 43 and 53 with a diameter of 202 mm were prepared.

### Example 1

By using the above-described method (1), an unvulcanized sheet for the thermal conductor 9 having a thickness of 0.5 mm is fabricated from 100 parts by mass of a natural rubber (NR) as a polymer, 5 parts by mass of a carbon black as a filler, and 20 parts by mass of a pitch-based carbon fiber [GRANOC Milled Fiber 'XN-100 (tradename)' manufactured by Nippon Graphite Fiber Corporation, with an average length of 50 µm and an average fiber diameter of 7 µm]. Meanwhile, circular rubber plates with a diameter of 1000 mm were cut out from the unvulcanized rubber sheet for the elastic layers 2, and a through hole defined by the 202 mm diameter inner peripheral surface 31 was cut out in the central portion of each of these rubber plates to thereby fabricate unvulcanized rubber plates for the elastic layers 2.

The seismic base isolation support apparatus 1 was fabricated from the above-described unvulcanized sheet for the thermal conductor 9, 32 unvulcanized rubber plates for the elastic layers 2, the unvulcanized rubber sheet with a thickness of 0.5 mm for the rubber coating layer 65 constituted of a rubber composition similar to that of the unvulcanized rubber sheet for the elastic layer 2, and the unvulcanized rubber sheet with a thickness of 5 mm for the outer peripheral protective layer 11 constituted of a rubber composition similar to that of the unvulcanized rubber sheet for the elastic layer 2. The thermal conductor 9 in the fabricated seismic base isolation support apparatus 1 showed a thermal conductivity of 1 W/m·K.

### Example 2

The seismic base isolation support apparatus 1 was fabricated in a method similar to that of Example 1 except that 30 parts by mass of the pitch-based carbon fiber of Example 1 as the filler and 30 parts by mass of flake graphite (1) ("PS-99 (tradename)" manufactured by Nishimura Graphite Co., Ltd., with an average particle size of 7 µm) were used. The thermal conductor 9 in the fabricated seismic base isolation support apparatus 1 showed a thermal conductivity of 10 W/m·K.

### Example 3

The seismic base isolation support apparatus 1 was fabricated in a method similar to that of Example 1 except that 100 parts by mass of a butyl rubber (Polysar Butyl) (IIR) as a polymer and, as fillers, 50 parts by mass of the carbon black and 15 parts by mass of the pitch-based carbon fiber of Example 1 as well as 75 parts by mass of flake graphite (2) ("KS15 (tradename)" manufactured by TIMCAL Ltd., with an average particle size of 8 µm) were used. The thermal conductor 9 in the fabricated seismic base isolation support apparatus 1 showed a thermal conductivity of 14 W/m·K.

### Example 4

The seismic base isolation support apparatus 1 was fabricated in a method similar to that of Example 1 except that 100 parts by mass of ethylene propylene rubber (EPDM) as a polymer and, as fillers, 40 parts by mass of a carbon black and 96 parts by mass of hexagonal boron nitride (BN) (manufactured by Denki Kagaku Kogyo Kabushiki Kaisha, with an average particle size of 15 µm) were used. The thermal conductor 9 in the fabricated seismic base isolation support apparatus 1 showed a thermal conductivity of 5 W/m·K.

### Example 5

The seismic base isolation support apparatus 1 was fabricated in a method similar to that of Example 1 except that the unvulcanized sheet for the thermal conductor 9 with a thickness of 0.5 mm was fabricated by the above-described method (3) from 100 parts by mass of a polyacetal resin (POM) as a polymer and, as fillers, 150 parts by mass of the pitch-based carbon fiber and 30 parts by mass of aluminum oxide (Al₂O₃) (manufactured by Showa Denko K.K.). The thermal conductor 9 in the fabricated seismic base isolation support apparatus 1 showed a thermal conductivity of 2 W/m·K.

### Example 6

The seismic base isolation support apparatus 1 was fabricated in the same way as in Example 1 except that the unvulcanized sheet for the thermal conductor 9 with a thickness of 0.5 mm was fabricated in the same way as in Example 5 from 100 parts by mass of a polyamide resin (PA6) as a polymer and, as a filler, 132 parts by mass of flake graphite (3) (manufactured by Nippon Graphite Industries, Co., Ltd., with an average particle size of 130 µm). The thermal conductor 9 in the fabricated seismic base isolation support apparatus 1 showed a thermal conductivity of 20 W/m·K.

### Example 7

The seismic base isolation support apparatus 1 was fabricated in the same way as in Example 1 except that the unvulcanized sheet for the thermal conductor 9 with a thickness of 0.5 mm was fabricated in the same way as in Example 5 from 100 parts by mass of the polyamide resin (PA6) as a polymer and 203 parts by mass of flake graphite (3) as a filler. The thermal conductor 9 in the fabricated seismic base isolation support apparatus 1 showed a thermal conductivity of 30 W/m·K.

### Example 8

The seismic base isolation support apparatus 1 was fabricated in the same way as in Example 1 except that the unvulcanized sheet for the thermal conductor 9 with a thickness of 0.5 mm was fabricated in the same way as in Example 5 from 100 parts by mass of a polybutylene terephthalate resin (PBT) as a polymer and, as fillers, 50 parts by mass of flake graphite (2) of Example 3 and 20 parts by mass of the pitch-based carbon fiber of Example 1. The thermal conductor 9 in the fabricated seismic base isolation support apparatus 1 showed a thermal conductivity of 12 W/m·K.

### Example 9

The seismic base isolation support apparatus 1 was fabricated in the same way as in Example 1 except that the unvulcanized sheet for the thermal conductor 9 with a thickness of 0.5 mm was fabricated in the same way as in Example 5 from 100 parts by mass of a low-hardness styrene-based thermoplastic elastomer as a polymer and, as fillers, 100 parts by mass of pitch-based carbon fiber of Example 1, 20 parts by mass of hexagonal boron nitride of Example 4 and 20 parts by mass of aluminum oxide of Example 5. The thermal conductor 9 in the fabricated seismic base isolation support apparatus 1 showed a thermal conductivity of 2 W/m·K.

### Example 10

The seismic base isolation support apparatus 1 was fabricated in the same way as in Example 1 from the unvulcanized sheet for the thermal conductor 9 and the unvulcanized rubber plates for the elastic layers 2 similar to those of Example 1 and from the thin-walled and thick-walled steel plates for the rigid layers 3 with a 60 µm thick aluminum coating layer formed on their entire surfaces by hot dip aluminizing. The thermal conductor 9 in the fabricated seismic base isolation support apparatus 1 showed a thermal conductivity of 1 W/m·K.

### Example 11

The seismic base isolation support apparatus 1 was fabricated in the same way as in Example 1 from the unvulcanized sheet for the thermal conductor 9 and the unvulcanized rubber plates for the elastic layers 2 similar to those of Example 2 and from the thin-walled and thick-walled steel plates for the rigid layers 3 with a 30 µm thick copper coating layer formed on their entire surfaces by electroless copper plating. The thermal conductor 9 in the fabricated seismic base isolation support apparatus 1 showed a thermal conductivity of 10 W/m·K.

### COMPARATIVE EXAMPLE

As comparative example, the seismic base isolation support apparatuses 1 were fabricated in the same way as in the respective Examples but without using the sheet for the thermal conductor 9.

Next, with respect to the seismic base isolation support apparatuses 1 obtained in Examples 1 to 11 and Comparative Example, a test was conducted on the temperature rise of the lead plug 7 due to a horizontal displacement H to which the seismic base isolation support apparatus 1 is repeatedly subjected a multiplicity of times at the time of a great earthquake. The test results are shown in Table 1 and Table 2.

### Test Conditions

Surface pressure: 15 N/mm² (706.9 kN)
Shear strain (γ): 250% (120 mm)
Frequency: 0.3 Hz
Maximum velocity: 22.6 kine
Exciting frequency: 50 cycles

### Test Method

By using a 300-ton biaxial testing machine, 50 cycles of excitation with sinusoidal waveform shown in the above-described test conditions were carried out, and the temperature of the lead plug 7 after the 50 cycle excitation was measured by a thermocouple sensor attached to the lead plug 7.

By using the value of the temperature of the lead plug 7 in Comparative Example after the 50 cycle excitation as 100, the lead plug temperature index in Table 1 and Table 2 represents the temperature of the lead plug 7 after the 50 cycle excitation in Examples 1 to 11 in comparison therewith.

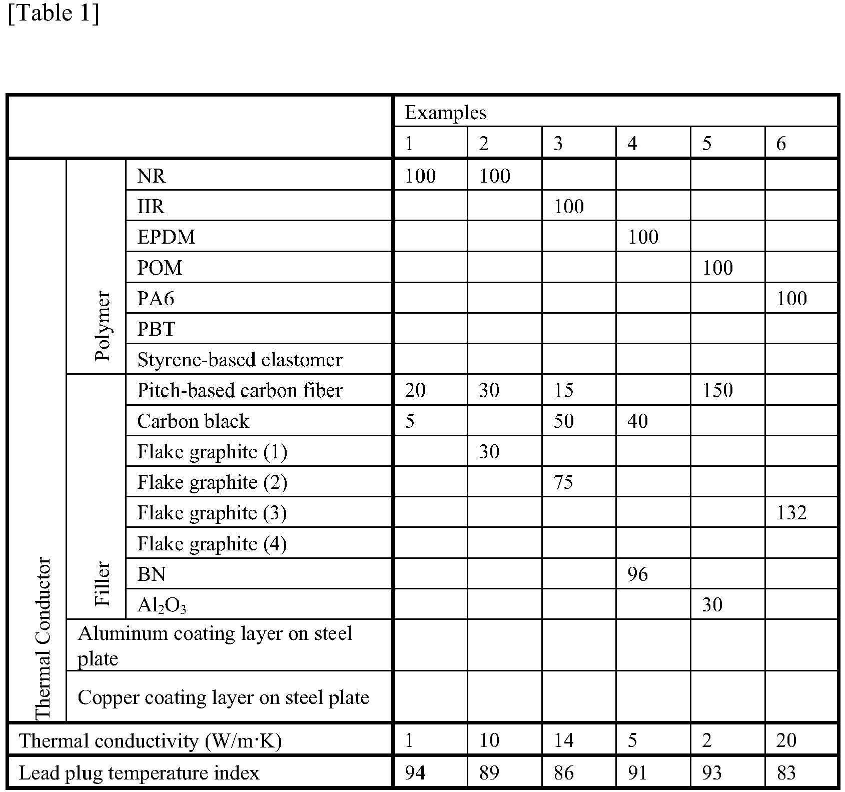

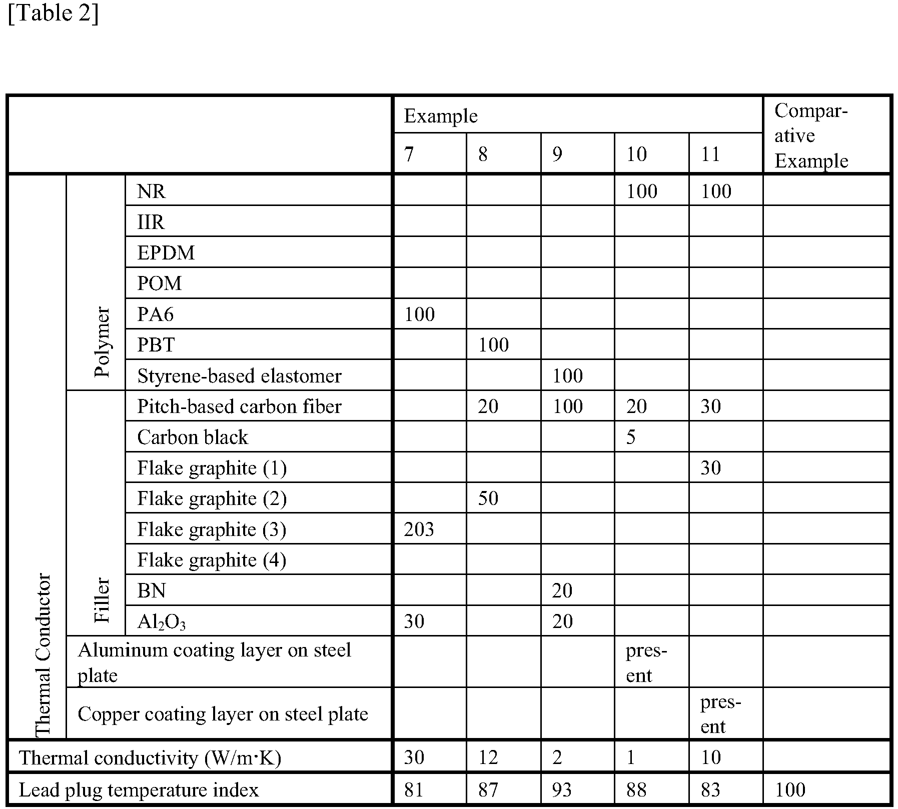

As can be appreciated from the test results, in the seismic base isolation support apparatuses in accordance with the present Examples, since the temperature rise occurring in the lead plug 7 can be dissipated to the rigid layers 3 through the thermal conductor 9, it is possible to prevent an excessive temperature rise of the lead plug 7 during an earthquake or the like.

### DESCRIPTION OF REFERENCE NUMERALS

- 1:: seismic base isolation support apparatus
- 2:: elastic layer
- 3:: rigid layer
- 4:: laminated body
- 5:: inner peripheral surface
- 6:: hollow portion
- 7:: lead plug
- 8, 10:: outer peripheral surface
- 9:: thermal conductor

## Claims

1. A seismic base isolation support apparatus comprising:
a laminated body having a plurality of rigid layers and elastic layers;
a columnar damping body disposed in a columnar hollow portion defined by an inner peripheral surface of said laminated body; and
a thermal conductor disposed between an outer peripheral surface of said damping body and the inner peripheral surface of said laminated body and having a thermal conductivity higher than that of the elastic layers,
wherein said thermal conductor has an inner peripheral surface which is in contact with the outer peripheral surface, which is tubular, of said damping body and an outer peripheral surface which is in contact with the inner peripheral surface of said laminated body, and each of the rigid layers has an annular steel plate having a higher thermal conductivity than the thermal conductivity (W/m·K) of the elastic layer.

2. The seismic base isolation support apparatus according to claim 1, wherein said thermal conductor, the inner peripheral surface of said thermal conductor, and the outer peripheral surface of said thermal conductor are tubular in shape.

3. The seismic base isolation support apparatus according to claim 1 or 2, wherein the thermal conductor includes at least a polymer and a filler having a thermal conductivity higher than that of the elastic layer.

4. The seismic base isolation support apparatus according to claim 3, wherein the polymer includes at least one of a thermosetting polymer and a thermoplastic polymer.

5. The seismic base isolation support apparatus according to claim 4, wherein the thermosetting polymer includes at least one of a crosslinked rubber, an epoxy resin, a polyimide resin, a bismaleimide resin, a phenolic resin, an unsaturated polyester resin, a thermosetting polyphenylene ether resin, and a thermosetting modified polyphenylene ether resin.

6. The seismic base isolation support apparatus according to claim 4 or 5, wherein the thermoplastic polymer includes at least one of a thermoplastic synthetic resin and a thermoplastic elastomer.

7. The seismic base isolation support apparatus according to any one of claims 3 to 6, wherein the filler includes at least one of a carbon-based filler, a metallic filler, and a ceramic filler.

8. The seismic base isolation support apparatus according to any one of claims 1 to 7, wherein the thermal conductor has a thermal conductivity of at least 1 W/m·K.

9. The seismic base isolation support apparatus according to any one of claims 1 to 8, wherein said thermal conductor at the outer peripheral surface thereof is in contact with surfaces of the steel plates constituting the inner peripheral surface of said laminated body.

10. The seismic base isolation support apparatus according to any one of claims 1 to 8, wherein each of the plurality of rigid layers has a coating layer covering the steel plate and having a thermal conductivity higher than that of the steel plate, and the thermal conductor at the outer peripheral surface thereof is in contact with a surface of the coating layer constituting the inner peripheral surface of said laminated body.
